(19) Europäisches Patentamt
European Patent Office
Office européen des brevets

(11) **EP 3 594 724 B1**

(12) **EUROPÄISCHE PATENTSCHRIFT**

(45) Veröffentlichungstag und Bekanntmachung des Hinweises auf die Patenterteilung:
**21.07.2021   Patentblatt 2021/29**

(51) Int Cl.:
**G01V 3/10** (2006.01)

(21) Anmeldenummer: **19195079.9**

(22) Anmeldetag: **11.11.2013**

(54) **SPULE FÜR EINEN INDUKTIVEN SENSOR UND SCHALTUNG ZU DESSEN ANSTEUERUNG**

COIL FOR AN INDUCTIVE SENSOR AND CIRCUIT FOR CONTROLLING THE SAME

BOBINE POUR UN CAPTEUR INDUCTIF ET CIRCUIT DE COMMANDE D'UN TEL CAPTEUR INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012   DE 102012220497**

(43) Veröffentlichungstag der Anmeldung:
**15.01.2020   Patentblatt 2020/03**

(62) Dokumentnummer(n) der früheren Anmeldung(en) nach Art. 76 EPÜ:
**13192360.9 / 2 730 950**

(73) Patentinhaber: **Elmos Semiconductor SE**
**44227 Dortmund (DE)**

(72) Erfinder:
• **BURCHARD, Bernd**
 **44227 Dortmund (DE)**
• **SCHMITZ, Dennis**
 **44227 Dortmund (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
EP-A1- 2 511 736        GB-A- 2 384 564
US-A- 2 147 746         US-A- 2 711 510
US-A1- 2008 204 118

**Beschreibung**

Die Erfindung betrifft eine Spulenanordnung für einen induktiven Sensor und eine Vorrichtung zur Ansteuerung einer derartigen Spulenanordnung.

Spulenanordnungen für Metalldetektoren sind in verschiedenen Ausgestaltungen bekannt. Dabei sind Vorkehrungen getroffen, dass sich die Auswirkungen des von einer Sendespulenanordnung erzeugten Magnetfeldes auf die Empfangsspulenanordnung dann kompensieren, die in der Empfangsspulenanordnung induzierte Spannung also im Wesentlichen null ist, wenn das magnetische Kopplungsfeld ungestört ist, sich also kein das Kopplungsfeld beeinflussendes (und damit mit der Spulenanordnung detektierbares) Objekt im Erfassungsbereich des Detektors befindet.

Der Aspekt der Auslöschung von Magnetfeldern wird in Laskoski, Pichorim und Abatti, "Distance Measurement With Inductive Coils" IEEE Sensors Journal, VOL.12, NO.6, pp., 2012, untersucht. Der Versuchsaufbau besteht aus zwei Flachspulen, welche sich in derselben Ebene befinden. Der Abstand d der Spulenachsen ist variabel und der Radius r der beiden Spulen beträgt 22,5 mm. Zur besseren Versuchsauswertung wurde der Faktor $\alpha$ = d/r eingeführt.

Im Rahmen des Versuchs, der in diesem Aufsatz beschrieben wird, wird die induzierte Spannung bei einer Variation von d bzw. $\alpha$ gemessen. Der Strom durch die Sendespule TX wurde so gewählt, dass die induzierte Spannung in der Empfangsspule RX bei einer Frequenz von 2 MHz gerade 200 mV beträgt. Das Ergebnis zeigt, dass das Maximum der induzierten Spannung bei einer vollständigen Überlappung der Spulen TX und RX erreicht wird. Je weiter die Achse der Empfangsspule RX von der Achse der Sendespule TX wegbewegt wird, desto geringer wird die induzierte Spannung. An einem Punkt $\alpha$ = 1,69 beträgt die induzierte Spannung null Volt. Dies ist dadurch zu erklären, dass Magnetfeldlinien und damit auch der für die Induktion verantwortliche magnetische Fluss der Sendespule TX die Empfangsspule RX auch mit umgekehrtem Vorzeichen durchdringen und somit der Induktion entgegenwirken. An einem bestimmten Punkt ($\alpha$ = 1,69) ist der Betrag der beiden Komponenten gleich und der resultierende Fluss ist null. Der Punkt hängt dabei von verschiedenen Faktoren ab, wie etwa der Bauform, der Frequenz, der Stromstärke oder der Spulenimpedanz. Wird $\alpha$ noch weiter vergrößert, dreht sich die Phase der induzierten Spannung um 180°, wobei die induzierte Spannung wieder leicht ansteigt, bevor sie vollständig abklingt.

DE-A-10 2009 021 804 beschreibt einen Metalldetektor. Der Detektor besteht aus wenigstens einer Empfangsspule und einer Sendespule, welche induktiv gekoppelt und zur Wechselwirkungsentkopplung teilweise überlappend angeordnet sind, so dass der zuvor beschriebene Effekt genutzt werden kann. Die Sendespule ist in zwei Hälften unterteilt, welche zur Ansteuerung von einem komplementären Wechselstrom durchflossen werden. Bei gleicher Bestromung (Amplitude) der beiden Sendespulen existiert ein Punkt, in dem sich die in die Empfangsspule induzierten Spannungen gegenseitig kompensieren (Punkt optimaler Auslöschung), wenn die Empfangsspulen dort platziert werden. Wenn nun ein elektrisch leitender Probekörper in die Nähe des Sensors gebracht wird, verschiebt sich dieser Punkt und die induzierten Spannungen kompensieren sich nicht mehr vollständig, so dass ein Signal an der Empfangsspule gemessen werden kann, welches ungleich Null ist. Durch die unterschiedliche Bestromung der beiden Sendespulenhälften kann der Punkt der Auslöschung wieder in die Ausgangslage zurück verschoben werden, so dass sich die in die Empfangsspule induzierten Spannungen gerade wieder vollständig kompensieren. Mit einer nachfolgenden Regelschaltung, die eine Sendespulenhälfte ansteuert, kann der Punkt der optimalen Auslöschung nachgeführt bzw. geregelt werden, so dass die induzierte Spannung wieder null beträgt. Die wesentlichen Merkmale dieses bekannten Metalldetektors sind, dass die Spulen überlappend angeordnet und auf zwei unterschiedlichen Ebenen platziert sind. Dies hat den Nachteil, dass geringste Fertigungstoleranzen bereits zu wesentlichen Fehlkompensationen führen können und in der Praxis die Anwendbarkeit des Verfahrens limitieren. Problematisch kann ferner sein, dass der Eingangsverstärker übersteuert, solange der Regelkreis nicht geschlossen ist. Die Möglichkeit, dass der Regelkreis sich nicht stabilisiert, ist damit nicht ausgeschlossen.

In DE-A-10 2009 029 928 wird ein ähnliches Prinzip wie zuvor beschrieben genutzt, wobei die Topologie der Spulenanordnung um eine weitere Spule erweitert wird. Die erweiterte Topologie besteht aus zwei Empfangsspulen und zwei Sendespulen, welche induktiv gekoppelt und teilweise überlappend angeordnet sind, wobei sich jeweils eine Empfangsspule und eine Sendespule in derselben Ebene befinden. Auch hier entsteht bei passender Bestromung der beiden Sendespulen ein Punkt der optimalen Auslöschung, so dass die in die Empfängerspulen induzierten Spannungen sich gegenseitig vollständig kompensieren und das Differenzsignal somit Null beträgt. Durch die unterschiedliche Bestromung der Sendespulen kann der Punkt der optimalen Auslöschung nachgeführt werden.

Wesentliche Merkmale dieser bekannten Anordnung sind die überlappende Anordnung der Spulen und die Platzierung der Spulen auf wenigstens zwei Ebenen. Zwar weist diese Spulenanordnung insoweit verbesserte Eigenschaften aus, als die Spule im Vakuum und bei idealer Abstimmung keine Induktion erzeugt. Es ist jedoch so, dass auch hier die Fertigungstoleranzen zu einer mangelhaften Nutzbarkeit führen.

In DE-A-103 62 165 wird ein induktiver Näherungsschalter beschrieben. Der induktive Näherungsschalter besteht aus einer Sendespule und vier Empfangsspulen, welche untereinander induktiv gekoppelt und so angeordnet sind, dass der in die Empfängerspulen eingeprägte magnetische Fluss in der Ruhestellung Null ist. Auch hier wird der Effekt gemäß dem Artikel von Laskoski et al. genutzt. Wird ein elektrisch leitender Probekörper in das durch die Sendespule erzeugte magnetische Wechselfeld eingebracht, verzerrt sich das Magnetfeld und die in die Spule induzierte Spannung ist ungleich Null. Wesentliche Merkmale dieses bekannten Näherungsschalters sind die überlappende Anordnung der Spulen und die Platzierung der Spulen auf wenigstens zwei Ebenen.

In DE-U-20 2006 004 158 wird ein induktiver Näherungsschalter basierend auf dem transformatorischen Kopplungsfaktor-Prinzip beschrieben. Der Sensor umfasst eine Sendespule und zwei Empfangsspulen in derselben Ebene, wobei die Sendespule den geringsten Radius rS gegenüber den Radien der Empfängerspulen rE, rE2 hat (rS<rE1<rE2) und die Spulen untereinander induktiv gekoppelt sind (d.h., dass durch die Sendespule eine Spannung in beide Empfangsspulen eingeprägt wird). Wenn sich ein elektrisch leitender Probekörper im magnetischen Wechselfeld der Sendespule befindet, wird das erzeugte Feld verzerrt und das Verhältnis der in die Empfangsspulen induzierten Spannungen ändert sich. Die wesentlichen Merkmale dieses bekannten Ansatzes sind die Anordnung der Spulen in derselben Ebene und dass die beiden Empfangsspulen außen angeordnet sind. Dies hat bereits erhebliche Vorteile. Allerdings müssen die Spulenwindungen und Durchmesser aufwendig aufeinander abgestimmt werden, da sich nur die Summe der Empfangsspulenwicklungen nicht aber die einzelnen Wicklungen der Empfangsspulen kompensieren lassen.

DE-A-101 22 741 beschreibt einen Detektor zur Ortung metallischer Gegenstände. Der Detektor umfasst zwei Sendespulen und eine Empfangsspule, die induktiv gekoppelt sind, wobei die Spulen so angeordnet sind, dass die Empfangsspule die innerste Wicklung darstellt. Die Sendespulen sind so dimensioniert (Windungszahlen und Abmessungen), dass sich die in die Empfangsspule induzierten Spannungen in Ruhestellung kompensieren. Wird ein elektrisch leitender Probekörper in das erzeugte Magnetfeld eingebracht, verzerrt sich das Magnetfeld und die Differenz der in die Empfangsspule induzierten Spannungen ist ungleich Null. Wesentlich für diesen bekannten Detektor sind die Anordnung der Spulen in einer Ebene und die Verwendung von zwei Sendespulen und einer Empfangsspule.

Weitere Spulenanordnungen sind aus der den Oberbegriff des Anspruch 1 bildenden EP-A-2 511 736 und aus US-A-3 882 374 sowie DE-U-20 2006 004 158 bekannt.

Die Erfindung stellt sich die Aufgabe eine Spulenanordnung für die Detektion von Objekten, die ein magnetisches Feld beeinflussen, bereitzustellen. Im Gegensatz zum Stand der Technik soll keine Sensorfläche durch Kompensationswicklungen etc. verlorengehen. Die Spulenanordnung soll so ausgelegt sein, dass eine Sendespule mit möglichst hoher Sendeleistung senden kann, ohne dabei (in Abwesenheit eines induktiv detektierbaren Objekts) ein wesentliches Feld in die Empfangsspulenanordnung einstrahlen zu können. Dabei soll es möglich sein, nicht induktiv ein Kompensationssignal in die Spulenanordnung einspeisen zu können.

Die Spulenanordnung soll eine möglichst große Symmetrie aufweisen, um einer analytischen Lösung zugänglich zu sein.

Zur Lösung dieser Aufgabe werden mit der Erfindung eine Spulenanordnung mit den Merkmalen des Anspruchs 1 und eine Ansteuervorrichtung einer solchen Spulenanordnung mit den Merkmalen des Anspruchs 14 vorgeschlagen. Die abhängigen Ansprüche beziehen sich auf verschiedene Ausgestaltungen der Erfindung.

Hauptgedanke des erfindungsgemäßen Konzeptes ist die Kompensation der von einer Sendespule in Empfangsspulenwicklungen induzierten Spannung bei einer Gesamtspulenanordnung, bei der die Sende- und Empfangsspulen nicht übereinander sondern nebeneinander angeordnet sind. Mit "nebeneinander angeordnet" sind damit im Sinne der Erfindung Spulenanordnungen gemeint, die in Form von Planar- bzw. Spiralspulen in einer Ebene nebeneinander angeordnet sind, oder aber auch Spulenanordnungen, bei denen die Spulen im Wesentlichen zylindrisch und konzentrisch zueinander angeordnet sind. In beiden Fällen wird nach der Erfindung dafür gesorgt, dass jeder Wicklung auf der Empfängerseite eine ebenfalls auf der Empfängerseite befindliche (Kompensations-)Wicklung zugeordnet ist, die bei einem Stromfluss durch die Sendespule von einem magnetischen Fluss durchdrungen werden, welcher betragsmäßig bzw. mengenmäßig gleich, aber unterschiedliches Vorzeichen aufweist. Damit kann erfindungsgemäß bei einem Planarspulenaufbau der Gesamtanordnung jeder Windung bzw. Wicklung der Empfangsspule eine Wicklung zugeordnet werden (und zwar ebenfalls auf der Empfängerseite), die zur Kompensation der induzierten Spannungen beiträgt, so dass auf der Ausgangsseite der Spulenanordnung ein Signal von Null bzw. ein im Wesentlichen auf null kompensiertes Signal anliegt.

Erfindungsgemäß sind also einer Sendespule zwei Empfangsspulen zugeordnet, die entsprechend miteinander verschaltet sind, so dass sich zwischen beiden Empfangsspulen ein Differentialsignal von im Wesentlichen Null ergibt. Dies kann beispielsweise durch eine Reihenschaltung beider Empfangsspulen oder aber durch andere Differenzbildung ihrer Ausgangsspannungen erzielt werden.

Die beiden Empfangsspulen gemäß dem erfindungsgemäßen Konzept weisen insbesondere die gleiche Windungs- bzw. Wicklungsanzahl auf. Insbesondere der erfindungsgemäße Ansatz, dass jeder Wicklung der einen Empfangsspule eine Wicklung der anderen Empfangsspule zugeordnet ist, lässt es zweckmäßig erscheinen, die Windungsanzahl der beiden Empfangsspulen gleich groß zu wählen.

Zur weiteren Kompensation der Empfangsspulen-Ausgangssignale ist erfindungsgemäß vorgesehen, die Spulenanordnung mit einem Kompensationsnetzwerk zu koppeln.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen stellen keine Einschränkung der durch die Ansprüche in ihrer Allgemeinheit definierten Erfindung dar. Das Erfindungsprinzip wird dabei unter Einbeziehung des Stands der Technik erläutert. Zum besseren Verständnis ist dieser ebenfalls in den Figuren dargestellt.

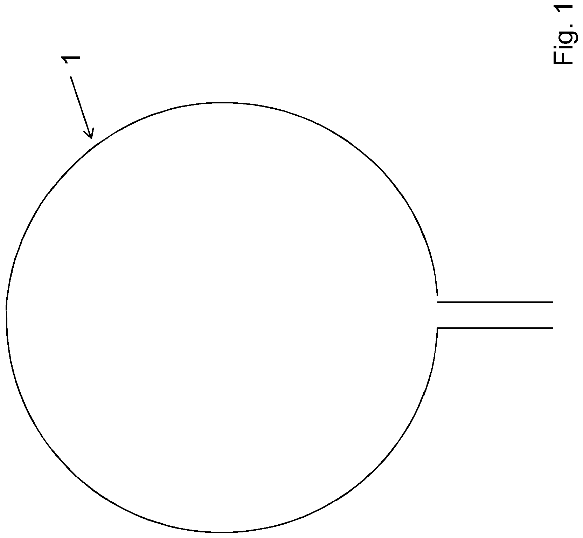

Fig. 1 zeigt eine einfache Leiterschleife, wie sie dem Stand der Technik entspricht.

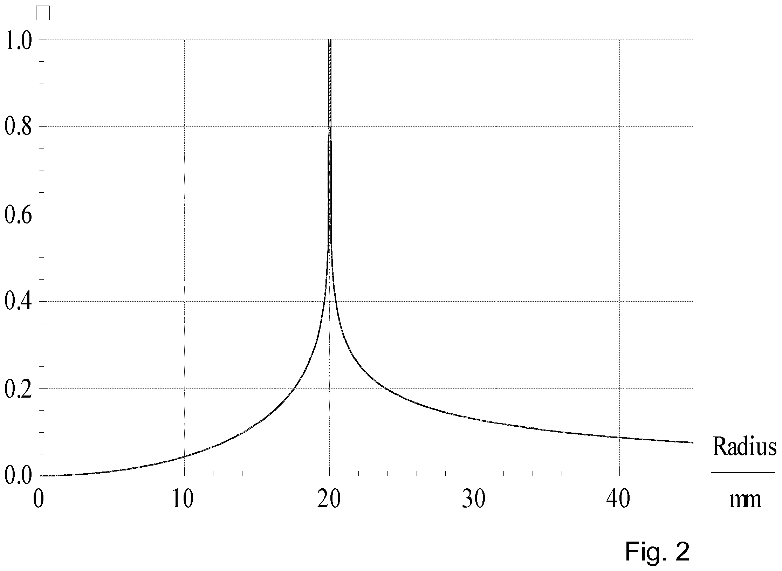

Fig. 2 zeigt den relativen magnetischen Fluss $\phi$ einer Leiterschleife (und zwar) in Abhängigkeit vom Radius erzeugt durch einen Ringstrom bei $r_0=20$ mm als Lösung des folgenden Integrals mit $I=1$ A und $\mu=1$

$$\Phi = \frac{\mu I r_0 r}{4\pi} \int_0^{2\pi} \frac{\cos(\varphi)}{\sqrt{r^2 - r_0^2 - 2rr_0\cos(\varphi)}} d\varphi$$

Dabei wird über den Spulenumlauf integriert.

Der magnetische Fluss hat ein Maximum bei dem Radius, der dem Radius der Leiterschleife entspricht.

Wichtig ist, dass es zu einem Fluss stets innerhalb und außerhalb der Leiterbahnschleife einen Radius gibt, der einem identischen Fluss entspricht. Diese erste Leiterschleife wird im Folgenden Sendewicklung genannt. Somit wird in eine zweite und dritte Leiterschleife, nämlich die erste und zweite Empfangswicklung die gleiche Spannung induziert, wenn die erste Empfangswicklung innerhalb der Sendewicklung bei einem Radius entsprechend einem ersten magnetischen Fluss des Feldes der Sendewicklung und die zweite Empfangswicklung beim korrespondierenden Radius außerhalb der Sendewicklung so platziert wird, dass der magnetische Fluss der Sendewicklung, der die zweite Empfangsspule durchflutet, dem magnetischen Fluss der ersten Empfangswicklung entspricht. Im Idealfall ist damit die induzierte Spannung in beide Empfangswicklungen gleich.

Ein wesentlicher Vorteil ist, dass die Spulenanordnung, bei der die Spulen in einer gemeinsamen Ebene angeordnet sind, analytisch berechnet werden kann.

Hierfür müssen, wie bereits oben gesagt, die Flüsse der beiden Windungen übereinstimmen.

Hierbei gilt dann die Gleichung

$$\frac{\mu I r_0 r_i}{4\pi} \int_0^{2\pi} \frac{\cos(\varphi)}{\sqrt{r_i^2 - r_0^2 - 2r_i r_0\cos(\varphi)}} d\varphi = \frac{\mu I r_0 r_a}{4\pi} \int_0^{2\pi} \frac{\cos(\varphi)}{\sqrt{r_a^2 - r_0^2 - 2r_a r_0\cos(\varphi)}} d\varphi$$

wobei $r_i$ für den Radius der inneren Empfangswicklung und $r_a$ für den Radius der äußeren Empfangswicklung steht. Sollen mehrere Sendewicklungen verwendet werden, so muss gelten:

$$\sum_{r_i} \frac{\mu I r_0 r_i}{4\pi} \int_0^{2\pi} \frac{\cos(\varphi)}{\sqrt{r_i^2 - r_0^2 - 2r_i r_0\cos(\varphi)}} d\varphi = \sum_{r_a} \frac{\mu I r_0 r_a}{4\pi} \int_0^{2\pi} \frac{\cos(\varphi)}{\sqrt{r_a^2 - r_0^2 - 2r_a r_0\cos(\varphi)}} d\varphi$$

Es sei angenommen, dass eine Sendespule bestehend aus $n_s$ Sendewicklungen gegeben ist und dass je $n_e$ Empfangswicklungen für eine innere und eine äußere Empfangsspule vorliegen.

Da es sich bei genauer Betrachtung bei dieser Konstruktion um einen Transformator handelt, ist offensichtlich, dass das Verhältnis der in die Empfangsspulen induzierten Spannungen zur Spannung $U_s$ an der Sendewicklung proportional zu folgendem Verhältnis sein muss:

$$\frac{U_e}{U_s} = \frac{n_e}{n_s}$$

Damit ist offensichtlich, dass es bei Spannungsansteuerung zur Erzielung eines möglichst großen Übersetzungsverhältnisses besonders günstig ist, nur eine einzige Sendespulenwicklung zu verwenden und möglichst viele Empfangsspulenwicklungen. Es ist ebenso offensichtlich, dass die eine Wicklung der Sendespule ausreichend stromtragfähig sein muss.

Des Weiteren ist es sinnvoll, möglichst viele Empfangswicklungen vorzusehen, um eine Spannungsmaximierung zu erreichen.

Diese Annahmen gelten selbstverständlich nicht bei Stromansteuerung.

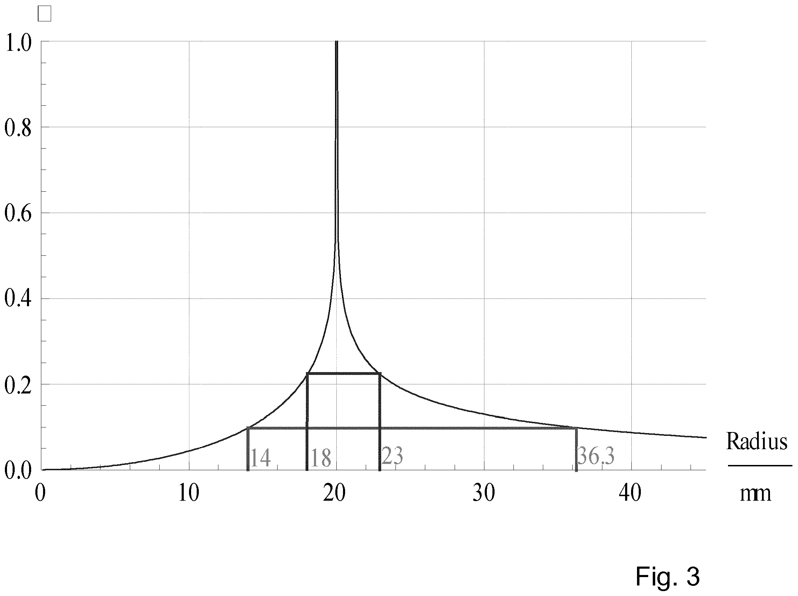

Fig. 3 zeigt die Konstruktion der äquivalenten Empfangswicklungsradien für eine Sendewicklung von 20mm Durchmesser und zwei beispielhaften inneren Empfangswicklungen von 14mm und 18mm Radius und die zugehörigen äußeren Empfangswicklungen von 23mm und 36,3mm. Es ist zu erkennen, dass die inneren Wicklungen auf Minimalmaß gelegt werden sollten, um maximal viele Wicklungen innerhalb eines vorgegebenen Sensorradius unterzubringen.

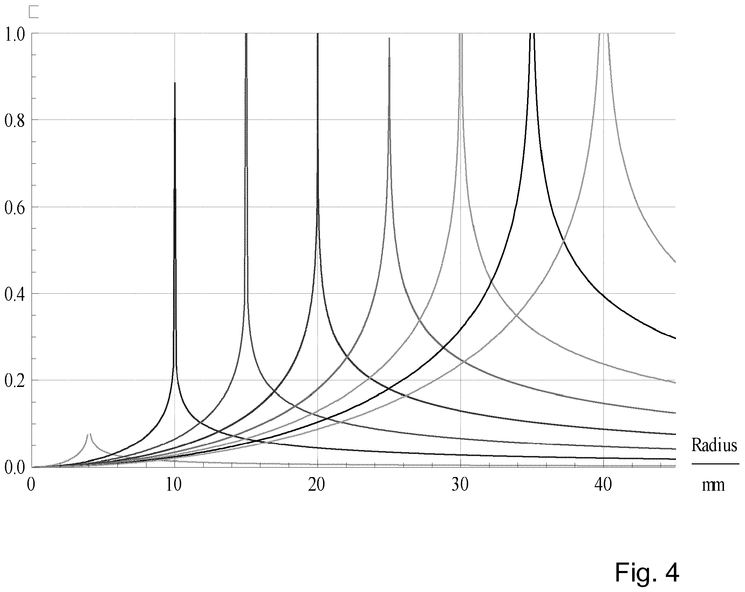

Fig. 4 zeigt den magnetischen Fluss für verschiedene Sendewindungsradien $r_0$. Es ist offensichtlich, dass ein Optimum für die Anzahl der Empfangsspulenwicklungen existiert.

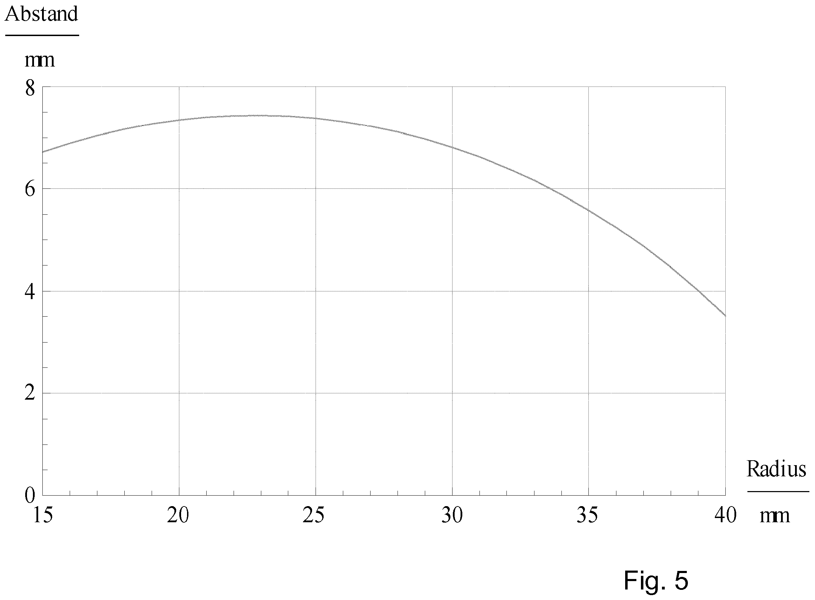

Fig. 5 zeigt das die Anzahl der Empfangsspulen-Wicklungen in Abhängigkeit von der Lage $r_0$ einer einzelnen Sendewicklung.

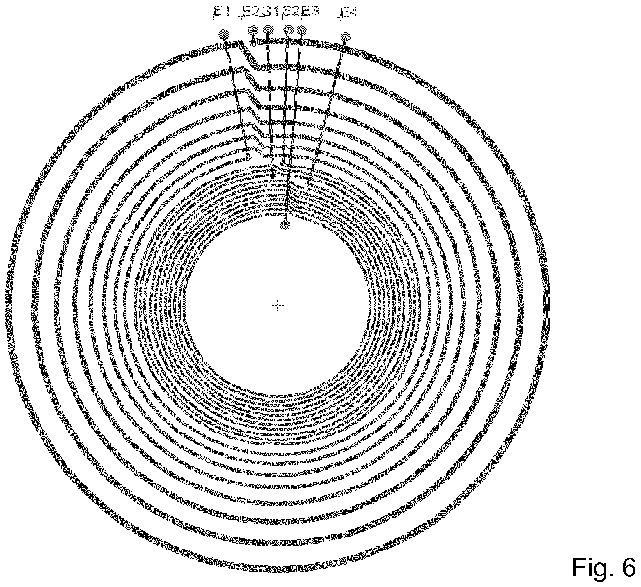

Fig. 6 zeigt ein Ausführungsbeispiel einer erfindungsgemäßen Spulenanordnung. Die Anschlüsse der äußeren Empfangsspule sind mit E1 und E2 bezeichnet, die der inneren Empfangsspule mit E3 und E4. Die Sendespule hat in diesem Beispiel drei Wicklungen und mit S1 und S2 bezeichnete Anschlüsse. Es sei darauf hingewiesen, dass es günstig ist, die ohmschen Widerstände der Wicklungen zur Symmetrieanpassung durch die Leiterbahnbreite anzupassen. Dies führt bei der äußeren Empfangsspule zu breiteren Wicklungen.

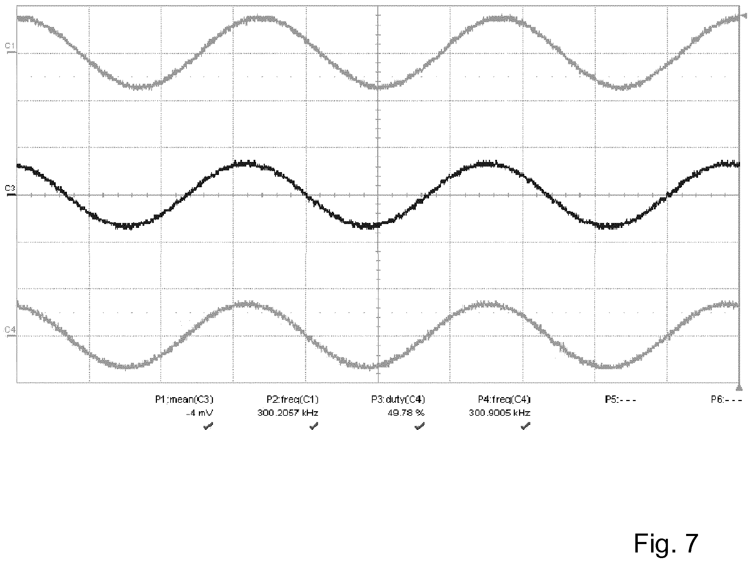

Fig. 7 zeigt ein Oszillogramm mit

- der Spannung an der Sendewicklung (siehe in Fig. 7 oben),
- der Spannung an der inneren Empfangswicklung (siehe in Fig. 7 Mitte) und
- der Spannung an der äußeren Empfangswicklung (siehe in Fig. 7 unten).

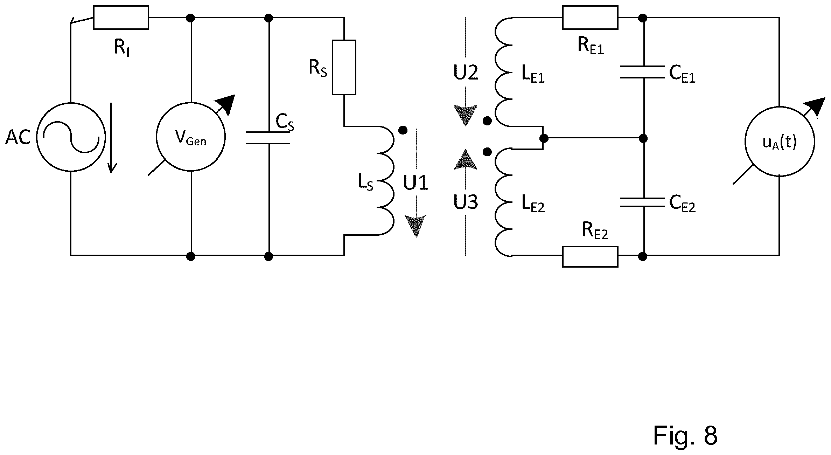

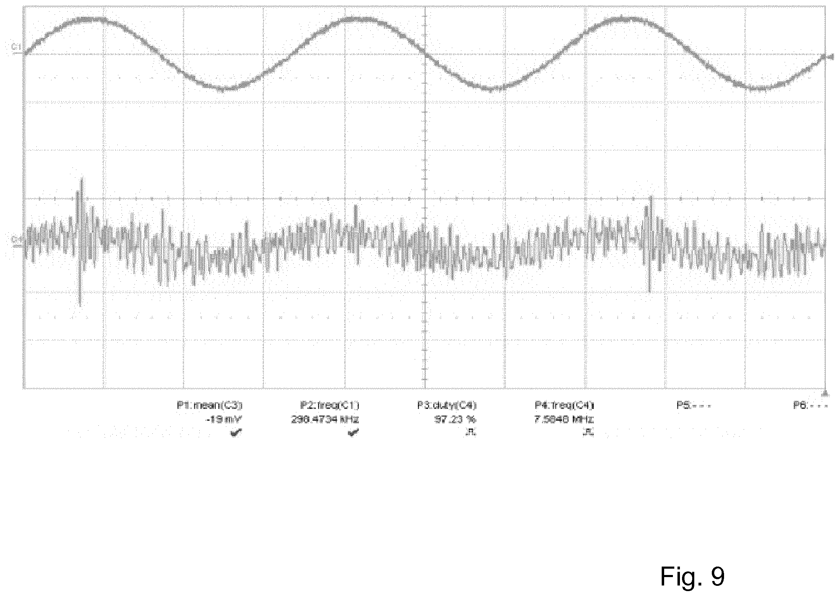

Werden die Spulen nun gegeneinander geschaltet (dies zeigt das Schaltbild Fig. 8.), so heben sich die Spannungen nahezu auf (Fig. 9).

Fig. 9 zeigt oben das Sendesignal und unten das Oszillogramm des verbleibenden Signals der kombinierten Empfangsspulen.

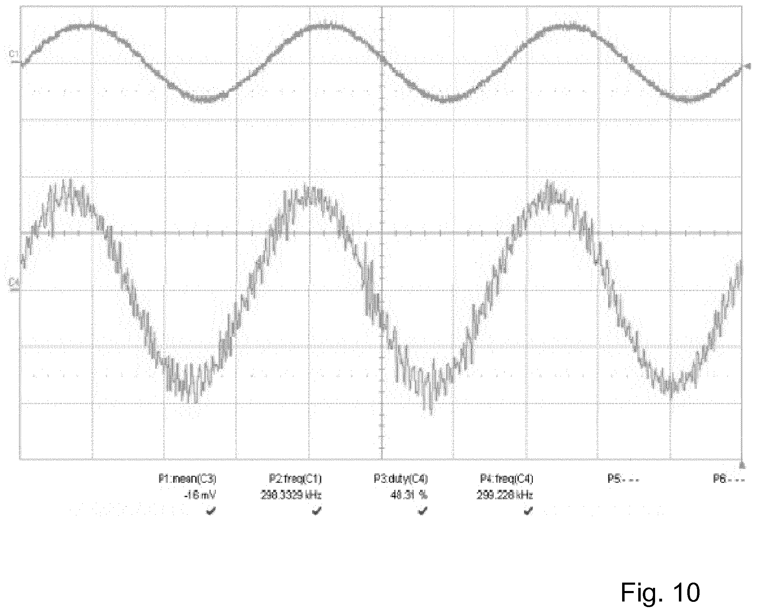

Bei Annäherung eines Probekörpers (d.h. eines zu detektierenden Objekts) zeigt die Spulenanordnung eine (magnetische) Auslenkung, da dann die Symmetrie der Flüsse in den Empfängerspulen gestört wird. Typischerweise ist der Fluss in die äußere Empfängerspule größer. Dies ist in Fig. 10 dargestellt.

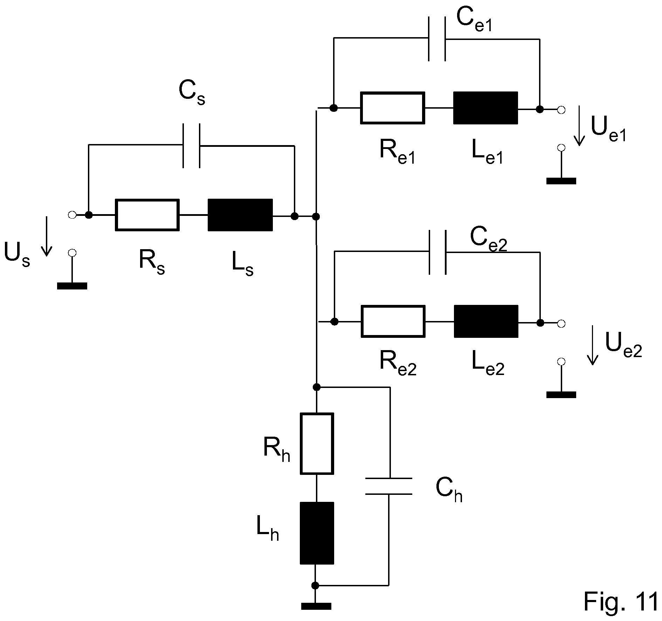

In der Praxis hat sich gezeigt, dass die parasitären Elemente der Flachspule zu einem Restsignal führen, dass im Wesentlichen auf Unsymmetrien beruht. Fig. 11 zeigt das Ersatzschaltbild einer solchen Flachspule. Auf der Sendeseite befinden sich die Streuinduktivität $L_s$, der Spulenwiderstand $R_s$ und die parasitäre Kapazität $C_s$. Auf der Empfangsseite befinden sich die Streuinduktivität $L_{e1}$, der Spulenwiderstand $R_{e1}$ und die parasitäre Kapazität $C_{e1}$ der inneren Empfangsspule. Außerdem befinden sich dort parallel dazu die Streuinduktivität $L_{e2}$, der Spulenwiderstand $R_{e2}$ und die parasitäre Kapazität $C_{e2}$ der äußeren Empfangsspule. Die Kopplung wird durch die Hauptinduktivität $L_h$, den Verlustwiderstand $R_h$ und die parasitäre Kapazität $C_h$ modelliert.

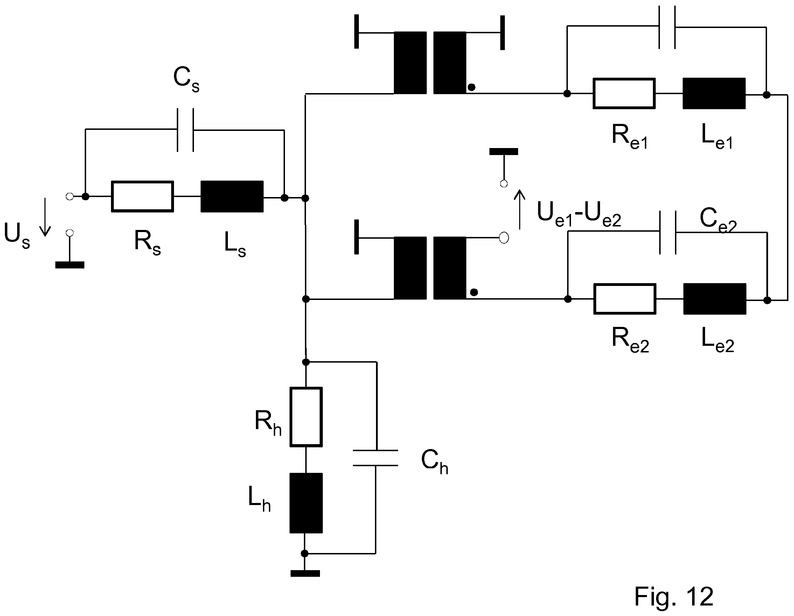

Fig. 12 zeigt die Verschaltung der Spulenanordnung zu einem Sensor. Hierbei wurden ideale Übertrager in das Ersatzschaltbild eingefügt, um den Sensor korrekt zu beschreiben. Da die innere Empfangsspule einen kleineren Durchmesser hat als die äußere Empfangsspule, ist die Eigeninduktivität und damit $L_{e1}$ kleiner als die der äußeren Empfangsspule $L_{e2}$. Ähnliches gilt aufgrund unterschiedlicher Flächen für die parasitären Kapazitäten $C_{e1}$ und $C_{e2}$. Hierdurch ergibt sich ein von Null verschiedenes Signal $U_{e1}-U_{e2}$.

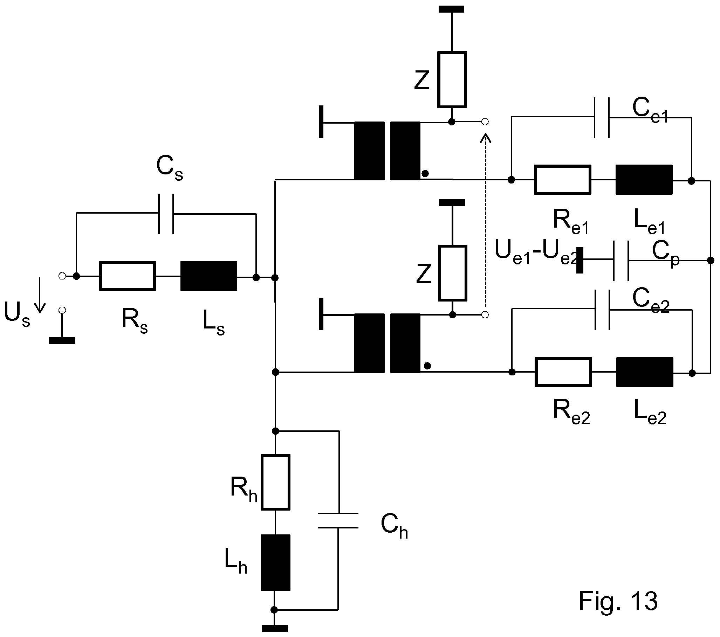

Insofern ergibt sich ein ähnliches Problem wie in DE-A-10 2009 021 804. Um ein optimales Signal zu erhalten, ist es sinnvoll, die Spulenanordnung mit einem Kondensator abzustimmen und die beiden Ausgänge mit einem komplexen Widerstand reflektionsfrei abzuschließen. (Fig. 13). Die Kapazität $C_p$ wirkt hierbei als Energiespeicher für die Induktivitäten.

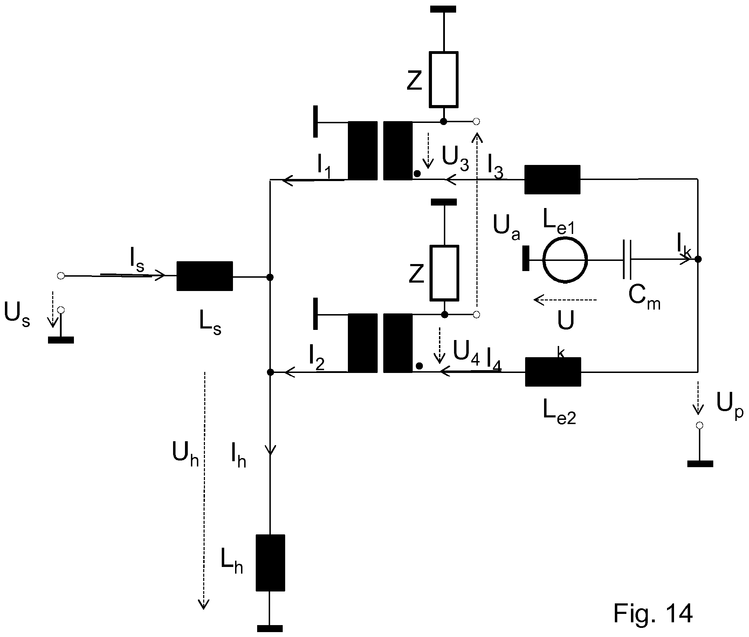

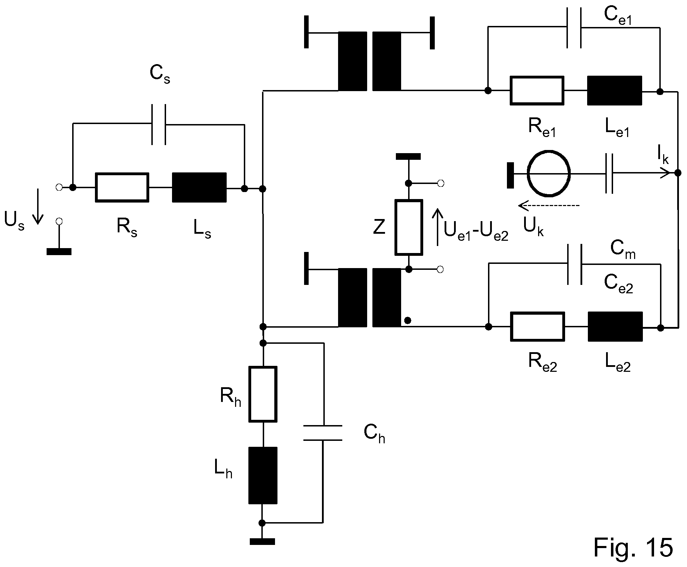

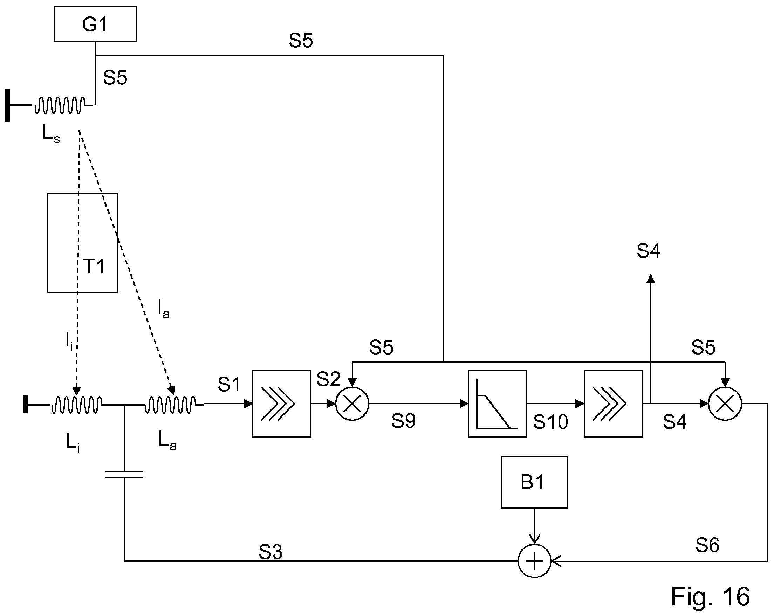

Fig. 14 zeigt die Einspeisung einer Kompensationsspannung über die Resonanzkapazität $C_p$. Durch diese Einspeisung kann das Signal $U_{e1}-U_{e2}$ auf null geregelt werden. Dies sei anhand von Fig. 16 für den Fall einer nicht symmetrischen Signalableitung (Fig. 15) diskutiert.

Ein Generator erzeugt ein Speise-(Spannungs-)Signal S5. Dieses Speisesignal S5 wird benutzt, um die Sendespule $L_s$ zu bestromen. An dieser Stelle sei darauf hingewiesen, dass das Schaltbild zur besseren Übersichtlichkeit nur die Elemente enthält, die zum Verständnis notwendig sind. So ist beispielsweise der Spulentreiber nicht eingezeichnet.

Die Sendespule $L_s$ erzeugt zwei Magnetflüsse, $I_i$ und $I_a$, die jeweils die äußere Empfangsspule La und die innere Empfangsspule $L_i$ durchfluten. Hierbei wird sowohl in $L_a$ als auch in $L_i$ die gleiche Spannung induziert, wodurch das Signal S1 Null sein sollte. Wie zuvor besprochen, weisen die realen Systeme noch einen Restfehler auf, auf dessen Kompensation noch eingegangen werden wird. Das Signal S1 wird verstärkt zum Signal S2. Dieses wird mit dem Speisesignal S5 multipliziert. Das resultierende Signal S9 wird zum Signal S10 gefiltert, so dass nur der Anteil in der Näher der Frequenz 0Hz übrig bleibt. Das Signal S10 wird verstärkt, wobei die Verstärkung so gewählt wird, dass das System sich stabilisiert. Verstärkung und Filterfunktion sollten daher sorgfältig an die Gegebenheiten angepasst werden, um ein Schwingen zu vermeiden. Die mathematische Operation, die zu dem Gleichsignal S10 führt, ist ein Skalar-Produkt der Signals S5 mit S2. Andere Skalar-Produkte sind denkbar. Das zum Signal S4 verstärkte Signal S10 wird nochmals mit dem Signal S5 zum Signal S6 multipliziert. Sofern notwendig, wird noch ein Gleichsignal B1 zu dem Signal S6 addiert, wodurch sich das Signal S3 ergibt.

Dieses wird über den Kondensator $C_p$ an den Knotenpunkt zwischen $L_i$ und $L_a$ eingespeist. Der Treiber ist zur Übersichtlichkeit wiederum nicht in den Signallaufplan eingezeichnet.

Ein Probekörper T1 kann nun die Magnetflüsse $I_a$ und $I_i$ asymmetrisch stören und so ein Signal an S1 hervorrufen. Dieses wird durch den Regelkreis verstärkt und über Cp wieder neutralisiert.

Da das Signal S1 nicht synchron zu dem Signal S5 sein wird, ist es sinnvoll, ein verzögertes Signal S5d zu definieren, das die Erfassung der verzögerten Komponente in S1 und deren Kompensation ermöglicht.

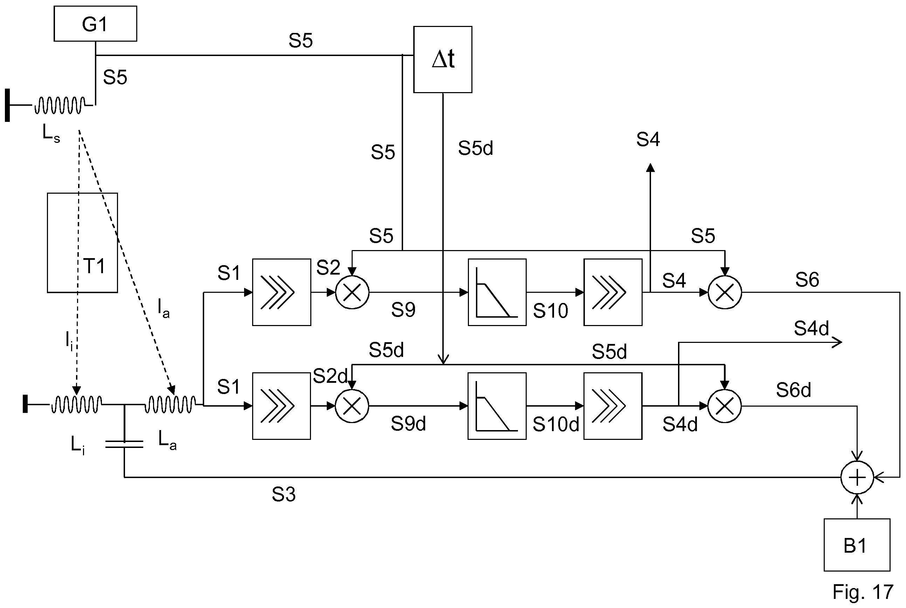

Dies zeigt Fig. 17. Das durch den Block Δt zum Signal S5 verzögerte Signal S5d wird nun in einem zweiten Regelschaltkreis gleicher Konstruktion anstelle des Signals S5 einer Skalar-Multiplikation mit dem Signal S5d unterzogen und das so erhaltene Signal S4d wieder mit S5d multipliziert und das Ergebnissignal S6d mit dem anderen Ergebnissignal S6 addiert.

Handelt es sich bei dem Signal S5 beispielsweise um ein getaktetes Signal mit 50:50 Tastverhältnis, so kann die Verzögerung durch den Block Δt beispielsweise zu einer Verzögerung um eine viertel Taktperiode, also 90° führen. Würden ein solches S5 und S5d miteinander in der beschriebenen Weise skalarmultipliziert, so wäre das Gleichsignal in diesem Fall Null.

Zwei solche Signale heißen orthogonal. Es ist offensichtlich, dass es bei anderen Ableitungen von S5d Signalen es sehr vorteilhaft ist, wenn diese zu dem S5 Signal orthogonal sind.

In dem obigen Beispiel gibt das Signal S5d daher so etwas wie eine Phasenverschiebung an, wenn das Signal S5 ein 50:50 Tastverhältnis aufweist.

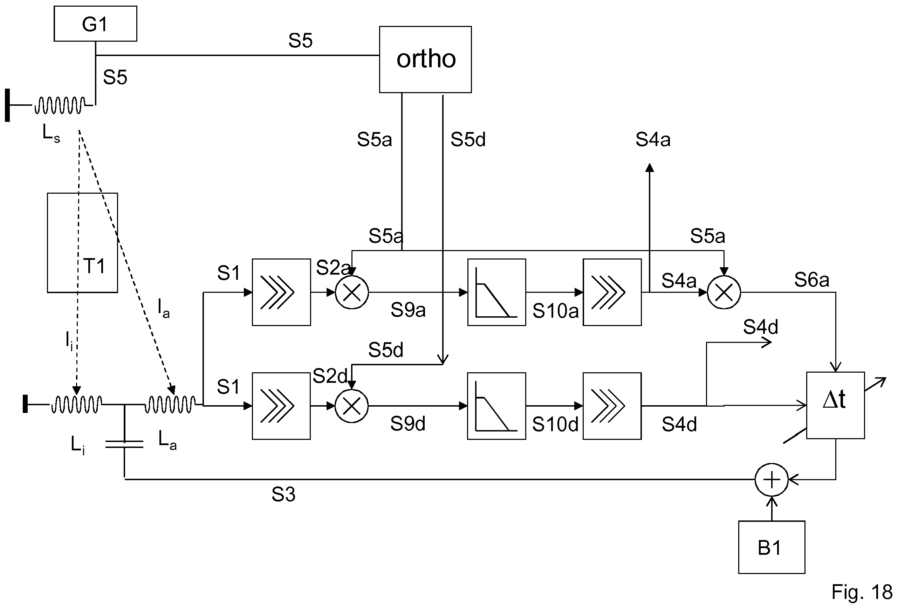

Eine andere Möglichkeit statt der Mischung der orthogonalen Komponenten ist die Phasendrehung oder Verzögerung. Dies kann mittels eines Phasenschiebers oder eines Verzögerungsgliedes im Rückkoppelpfad geschehen. Fig. 18 zeigt einen derartigen Signallaufplan. Der Block "Ortho" erzeugt dabei aus dem Signal S5 die beiden zueinander orthogonalen Signale S5a und S5d.

In diesem Zusammenhang sei auf die EP-A-2 631 674 und die DE-A-10 2012 015 442 hingewiesen.

Es verbleibt das Problem der Sicherstellung der Symmetrie der Spulenanordnung.

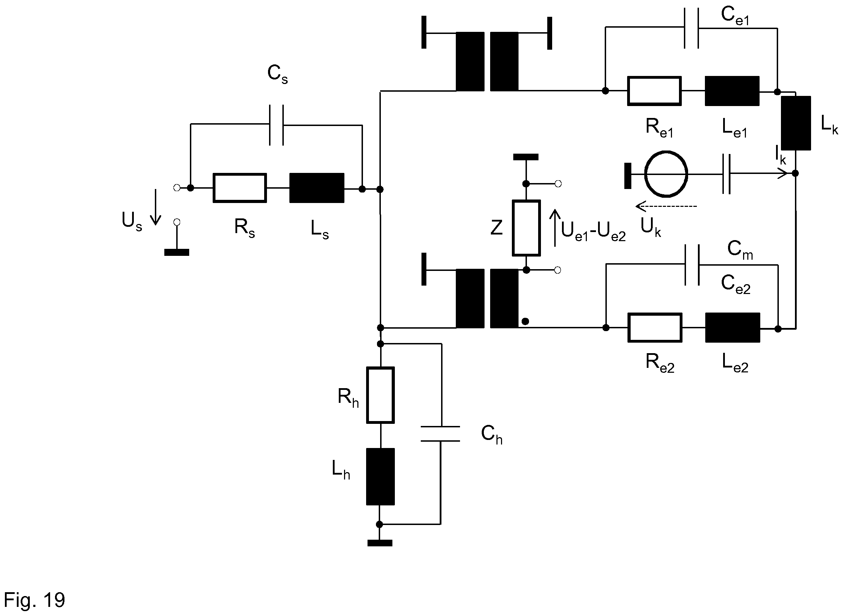

Hierzu ist es zweckmäßig, seriell zu der inneren Empfangsspule eine Kompensationsspule derart zu schalten, dass diese die Induktivitätsdifferenz zur äußeren Empfangsspule ausgleicht, ohne dass die Sendespule in der Lage sein darf, eine Spannung in diese Kompensationsspule zu induzieren (Fig. 19).

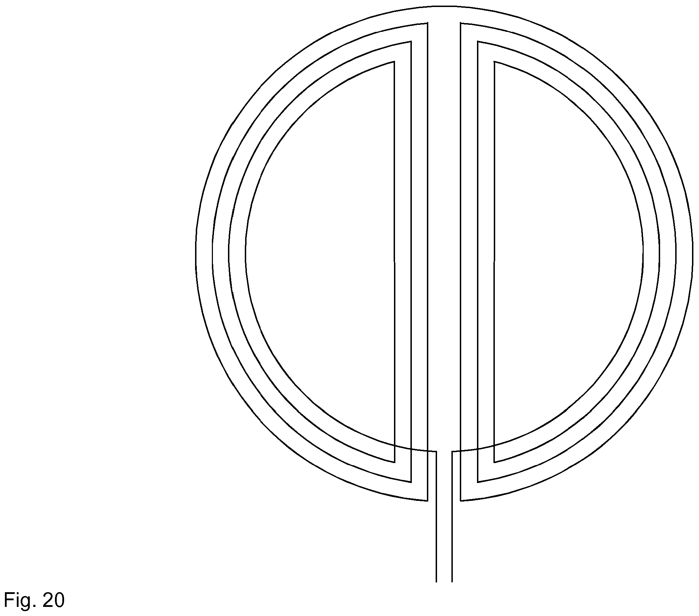

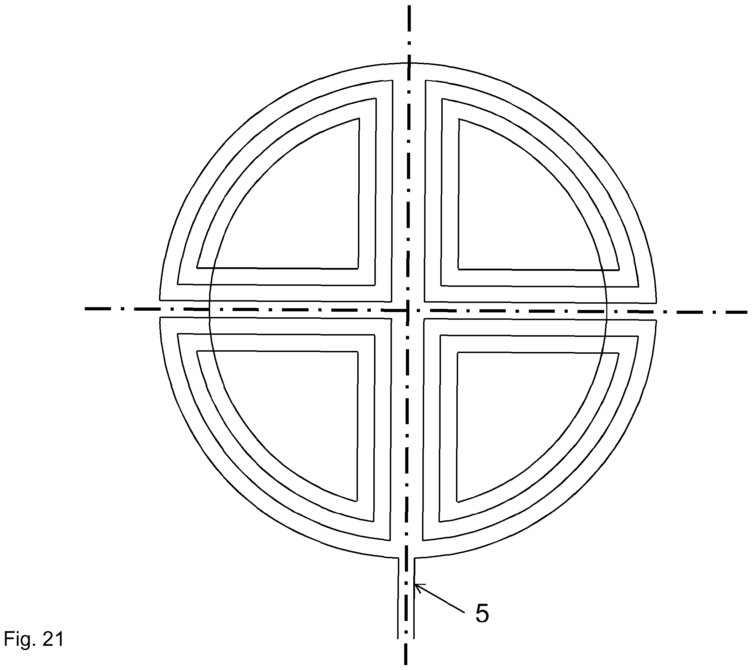

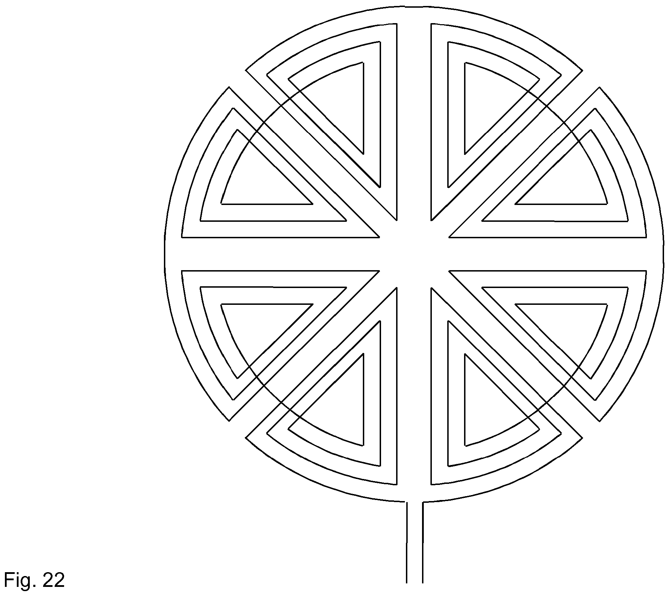

Dies kann im Layout beispielsweise durch eine Dipolspule (Fig. 20) oder eine andere Multipolspule, beispielsweise eine Quadrupol-Spule (Fig. 21) oder Octupol-Spule (Fig. 22) usw. geschehen. Es sei hier angemerkt, dass derartige Multipolspulen mit einer Entwicklung des resultierenden Magnetfeldes nach zylindrischen Lösungen der Wellengleichung einhergehen und daher nicht nur mehrere Pole in Richtung des zylindrischen Koordinatenwinkels φ möglich sind, sondern auch in radialer Richtung. Solche Multipolspulen können auch als Sende- und Empfangsspulen verwendet werden, was die Berechnung jedoch wesentlich erschwert. In der Regel ist daher, wie im Eingangsbeispiel verwendet, eine radialsymmetrische Sendewicklung optimal.

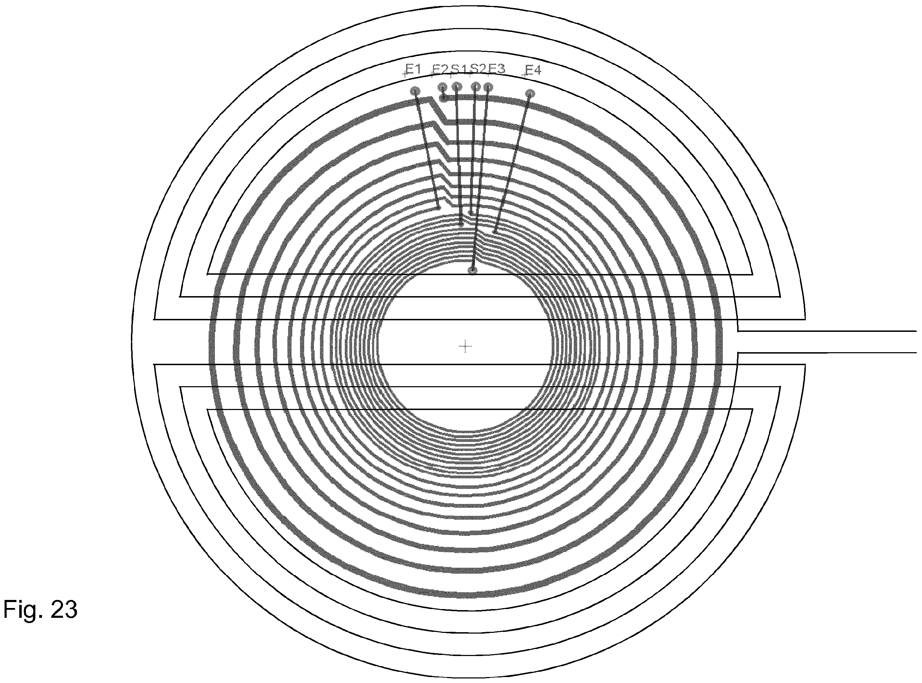

Fig. 23 zeigt eine solche orthogonale Überlagerung der Sendespulenanordnung mit einer Dipolspule. Deren Induktivität ist aber zu groß, um als Kompensationsspule $L_K$ dienen zu können.

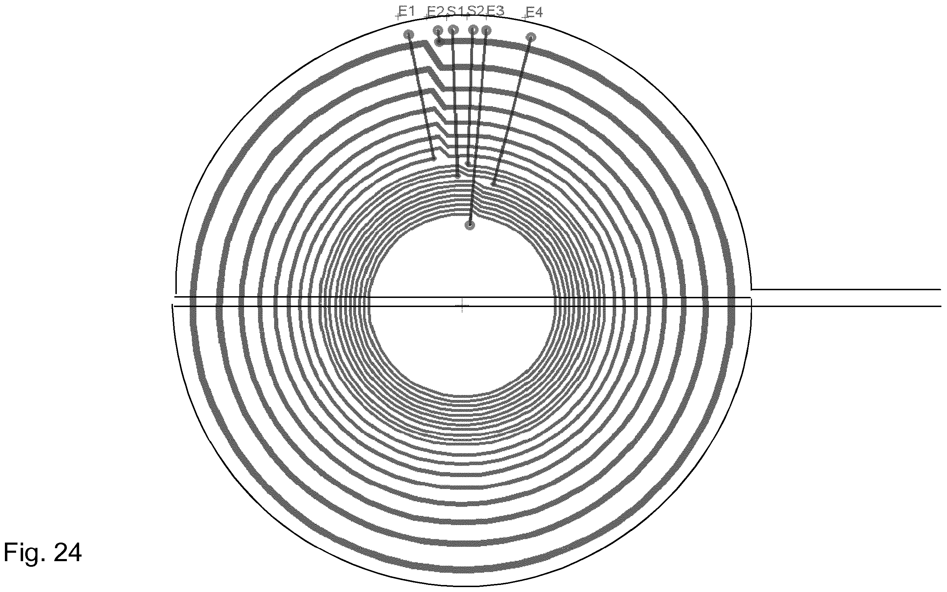

Eine Konstruktion ähnlich der in Fig. 24 ist daher sinnvoller. Die realen Maße müssen der jeweiligen Applikation angepasst werden.

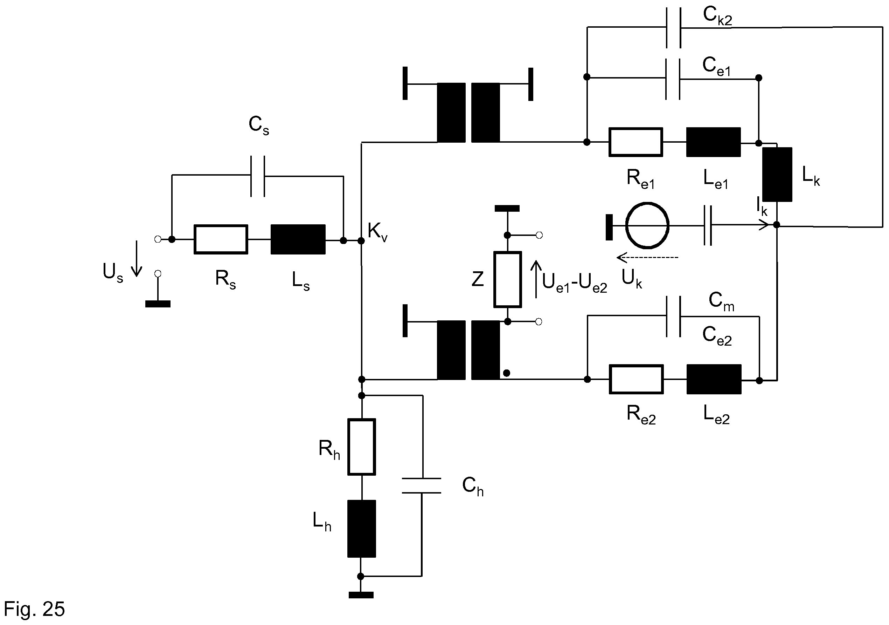

Es wäre wünschenswert, den kapazitiven Anteil beispielsweise durch einen Kondensator $C_{k2}$ anzupassen (Fig. 25). Dies ist jedoch nicht möglich, weil der virtuelle Knoten $K_v$ nicht zugänglich ist. Es handelt sich schließlich nur um ein Ersatzschaltbild.

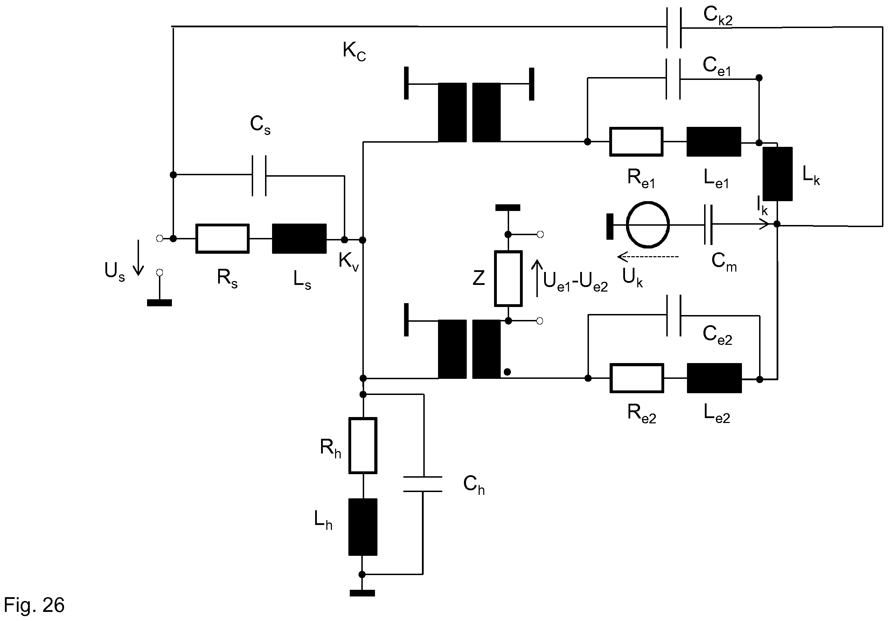

Ein Anschluss des Kondensators auf der Primärseite bringt keine Verbesserung (Fig. 26).

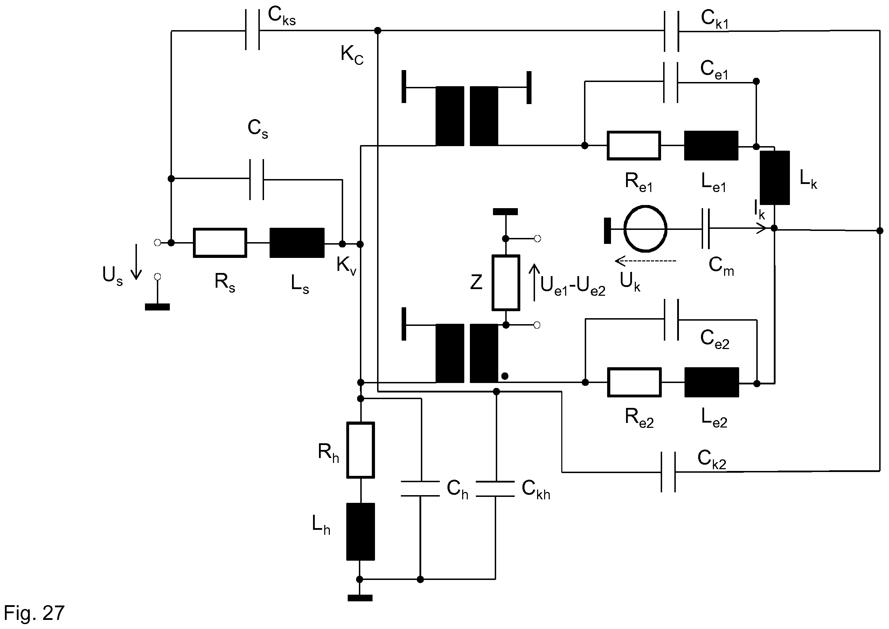

Erfahrungsgemäß ist eine sternförmige Schaltung (Fig. 27) von drei Kondensatoren $C_{ks}$, $C_{k1}$, $C_{k2}$ vorgesehen, die als 3-Tor-Übertrager parallelgeschaltet werden. Hierdurch kann die Unsymmetrie der Spulenanordnung in kapazitiver Hinsicht verkleinert werden. Der Sternpunkt $K_C$ kann über eine komplexe Impedanz mit dem Bezugspotenzial, beispielsweise dem Masseanschluss auf der Primärseite verbunden werden. In Fig. 27 stellt der Kondensator $C_{kh}$ diese komplexe Impedanz dar. Natürlich ist es denkbar, auch andere komplexe Impedanzen wie beispielsweise Spulen und aktive und passive Netzwerke an dieser Position zu benutzen. Es ist denkbar, als Spulen an dieser Position im Netzwerk solche Spulen zu verwenden, die zu allen anderen Spulen wieder orthogonal sein sollten. Der Hintergrund hierzu ist, dass ein Stromfluss in einer dieser Spulen zu keinem Stromfluss in den anderen Spulen führen sollte.

Auch hier ist es günstig, diese Kondensatoren im Layout der Spulenanordnung beispielsweise als Interdigitalkondensatoren vorzusehen.

Die Zuleitungen der in der Spulenanordnung verwendeten Spulen werden vorzugsweise in genau radialer Richtung in einer anderen Ebene als diejenigen der Windungen selbst ausgeführt, da dies eine Induktion durch den Sender verhindert oder zumindest minimiert. Auch wirken sich dann Justierfehler nicht so gravierend aus.

Es ist offensichtlich, dass es besonders positiv ist, alle Windungen und Kapazitäten in einem einzigen Lithografieschritt herzustellen. Hierdurch ist die Präzision der Lage der Windungen zueinander maximiert und die Restinduktion ohne Probekörper minimiert.

Besonders vorteilhaft ist die Realisierung einer solchen Spulenanordnung mit Hilfe von Mikrostrukturierungsverfahren, wie sie beispielsweise in der VLSI-Technologie eingesetzt werden.

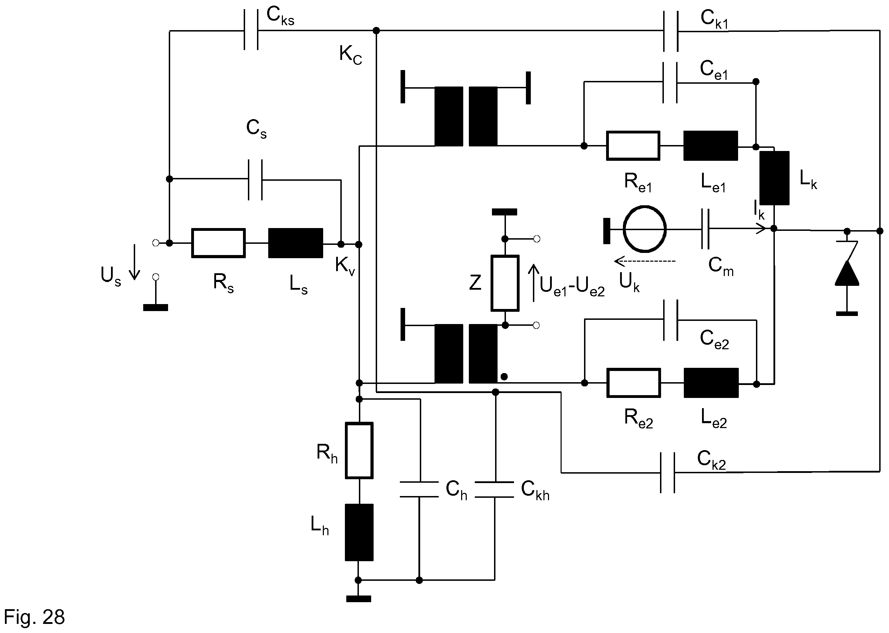

Hierdurch können wesentlich mehr Spulenwindungen innerhalb der Sendewindung untergebracht werden. Damit steigt der erzielbare Übertragungsfaktor massiv an. Um die Erzeugung von Überspannungen für den Fall einer sehr guten Kopplung zwischen Primär- und Sekundärspulen zu verhindern, ist es daher sinnvoll, den Knotenpunkt einer solchen integrierten Spulenanordnung mit sehr vielen Windungen (z.B. 5000) mit einem Überspannungsschutz (beispielsweise einer Zenerdiode) zu versehen. Dieser verhindert beispielsweise, dass bei übergroßer Annäherung eines Messobjektes eine Hochspannung im Knotenpunkt erzeugt wird, die zerstörerisch wirken kann. Eine solche Spannungsbegrenzung ist in Fig. 28 dargestellt.

Wird die Spulenanordnung auf einem Halbleitersubstrat hergestellt, so kann der Überspannungsschutz als Regler oder Zenerdiode vor dem Aufbringen der Spulenanordnung im Rahmen der Verdrahtung der Halbleiterbauelemente in dem Halbleitersubstrat hergestellt werden. Wichtig vor dem Aufbringen der Spulen auf ein Halbleitersubstrat ist die Erstellung mindestens einer Isolationsschicht zwischen Halbleitersubstrat und Spulenwindungen um diese zu isolieren. Es ist empfehlenswert, das Substrat auf ein definiertes Potenzial zu legen, wenn dieses leitfähig ist.

Wird die Spulenanordnung auf einem anderen Substrat, beispielsweise einem polierten Glas oder Keramikträger hergestellt, so ist es denkbar, den Überspannungsschutz durch einen Halbleiterherstellungsprozess zu realisieren, der auf aufgebrachten Halbleiterschichten basiert. Dieses Aufbringen kann beispielsweise durch Aufdampfen oder Aufsputtern etc. erfolgen. Es sind vielfältige Dünnschichttechnologien bekannt, die das Aufbringen von Halbleiterbauelementen auf Oberflächen wie Glas oder Keramik ermöglichen.

Selbst die Verwendung von Metallen als Basismaterial ist nicht ausgeschlossen, wenn auch hier eine Isolationsschicht, beispielsweise aufgesputtertes SiO2 vor dem Aufbringen der Windungen vorgesehen wird.

Schließlich ist es möglicherweise sinnvoll, nicht nur eine Spannungsbegrenzung vorzusehen, sondern an verschiedenen Windungen einer Sekundärspule mehrere Spannungsbegrenzungen vorzusehen. Hierdurch ist eine homogenere Verteilung der Überspannungsströme möglich.

Können aus technologischen Gründen, beispielsweise bei der Verwendung von Glas, Keramik, Metall- oder Halbleitersubstraten die Anschlüsse der Spulen, die ja senkrecht zu den Windungen radial verlaufen sollen, nicht auf der anderen Seite des Substrates, wie bei zweiseitigen Platinen, oder innerhalb des Substrates wie bei mehrlagigen Platinen, gefertigt werden, so muss zwischen dem Aufbringen der Spulenwindungen und dem Aufbringen der Anschlussleitungen eine Isolationsebene aufgebracht und Durchkontaktierungen geöffnet werden. Hierfür sind mannigfache Verfahren aus der Halbleitertechnologie bekannt.

**Patentansprüche**

1. Spulenanordnung für einen induktiven Sensor, mit

    - einer Sendespule,
    - mindestens einer ersten Empfangsspule und
    - mindestens einer zweiten Empfangsspule,
    - wobei die Windungen der ersten Empfangsspule innerhalb aller Windungen der Sendespule liegen,
    - wobei die Windungen der zweiten Empfangsspule außerhalb aller Windungen der Sendespule liegen und
    - wobei jeder Windung der ersten Empfangsspule eine Windung der zweiten Empfangsspule derart zugeordnet und diese Windungen in Relation zur Sendespule derart angeordnet sind, dass die besagten Windungen bei einem Stromfluss durch die Sendespule von der größenmäßig gleichen magnetischen Durchflutung, jedoch in entgegengesetzten Richtungen, durchsetzt sind,
    **gekennzeichnet durch**,
    - ein Kompensationsnetzwerk das dazu dient, die Anordnung so zu symmetrisieren, dass die auf der Empfängerseite induzierte Spannung für den beabsichtigten Zweck vernachlässigbar ist, und zwar durch Vorsehen einer Regelung durch eine Regelschleife,
    - wobei zumindest ein Teil des Kompensationsnetzwerkes als eine sternförmige Verschaltung von mindestens drei Kondensatoren $C_{ks}$, $C_{k1}$ und $C_{k3}$ ausgebildet ist, wobei dieses Teilnetzwerk einen gemeinsamen Sternpunkt $K_C$ aufweist.

2. Spulenanordnung nach Anspruch 1, **dadurch gekennzeichnet, dass** der gemeinsame Sternpunkt $K_C$ über ein Netzwerk, das eine komplexe Impedanz bildet, mit dem gemeinsamen Bezugspunkt verbunden ist.

3. Spulenanordnung nach Anspruch 2, **dadurch gekennzeichnet, dass** der gemeinsame Sternpunkt $K_C$ über ein Netzwerk, das eine komplexe Impedanz mit einem einzelnen Kondensator $C_{kh}$ bildet, mit dem gemeinsamen Bezugspunkt verbunden ist.

4. Spulenanordnung nach Anspruch 2 oder 3, **dadurch gekennzeichnet, dass** der gemeinsame Sternpunkt $K_C$ über ein Netzwerk, das eine komplexe Impedanz bildet, mit dem gemeinsamen Bezugspunkt auf der Primärseite verbunden ist.

5. Spulenanordnung nach einem der Ansprüche 1 bis 4, **dadurch gekennzeichnet, dass** die beiden Empfangsspulen verschaltet sind, wobei sich die bei einem Stromfluss durch die Sendespule in den beiden Empfangsspulen induzierten Spannungen zur Erzeugung einer Gesamtausgangsspannung gegeneinander im Wesentlichen aufheben, wobei die beiden Empfangsspulen insbesondere in Reihe geschaltet oder mit einem Differenzbildner verbunden sind.

6. Spulenanordnung nach einem der Ansprüche 1 bis 5, **dadurch gekennzeichnet, dass** sämtliche Spulen als Flach- oder Spiralspulen ausgebildet sind oder dass sämtliche Spulen zylindrisch und konzentrisch zueinander angeordnet sind, wobei bei beiden Alternativen die Windungen der Spulen eine beliebige geometrische Form aufweisen können und insbesondere rund, oval, mehreckig o.dgl. sind.

7. Spulenanordnung nach Anspruch 6, **dadurch gekennzeichnet, dass** die Spulen bei Ausbildung als Flach- oder Spiralspulen auf einer gemeinsamen Ebene angeordnet sind.

8. Spulenanordnung nach einem der Ansprüche 5 bis 7, **dadurch gekennzeichnet, dass** die Spulen in einem Lithografieschritt oder monolithisch auf einem ebenen Substrat oder einem Halbleiterwafer oder einer Glasscheibe oder einer Keramikplatte durch Druck oder Foto- oder Elektronenstrahl- oder Ionenstrahl- oder Partikelstrahllithografie hergestellt sind.

9. Spulenanordnung nach einem der vorhergehenden Ansprüche, **dadurch gekennzeichnet, dass** die Zuleitungen der Windungen zumindest teilweise in radialer Richtung ausgeführt sind und/oder dass die Zuleitungen der Windungen zumindest teilweise in einer anderen Metallisierungsebene als die Windungen ausgeführt und von den Windungen isoliert sind.

10. Spulenanordnung nach einem der vorhergehenden Ansprüche, **dadurch gekennzeichnet, dass** sämtliche Spulen rotationssymmetrisch sind und/oder dass sämtliche Spulen die gleiche Symmetrie-Achse haben.

11. Spulenanordnung nach einem der vorhergehenden Ansprüche, **dadurch gekennzeichnet, dass** eine innerhalb der Sendespule liegende Empfangsspule mit einer außerhalb der Sendespule liegenden Empfangsspule verschaltet ist und dass die induzierten Spannungen bei Nichtanwesenheit eines Messobjektes sich auslöschen und nur durch parasitäre Elemente hervorgerufene Spannungspegel verbleiben und bei Anwesenheit eines Objektes eine zusätzlich von Null verschiedene Spannung induziert wird.

12. Spulenanordnung nach einem der vorhergehenden Ansprüche, **dadurch gekennzeichnet, dass** mindestens ein Knotenpunkt der Empfangsspulen oder eine Windung mindestens einer Empfangsspule mit mindestens einer Spannungsbegrenzungsvorrichtung versehen ist.

13. Spulenanordnung nach einem oder mehreren der vorhergehenden Ansprüche, **dadurch gekennzeichnet, dass** die Sendespule nur eine Sendewicklung aufweist und dass die Anzahl der Windungen der ersten Empfangsspule gleich der Anzahl der Windungen der zweiten Empfangsspule ist.

14. Vorrichtung zur Ansteuerung einer Spulenanordnung nach einem der vorhergehenden Ansprüche, **dadurch gekennzeichnet, dass**

- aus der in die Verschaltung der Empfangsspulen induzierten Spannung ein Kompensationsregelsignal erzeugbar ist, das über mindestens ein Kopplungsbauelement $C_P$ in den Knotenpunkt der Empfangsspulen einspeisbar ist, oder
- aus der in die Verschaltung der Empfangsspulen induzierten Spannung ein Kompensationsregelsignal erzeugbar ist, das über mindestens ein Kopplungsbauelement $C_P$ in den Knotenpunkt der Empfangsspulen einspeisbar und gegenüber dem Sendesignal phasenverschoben oder verzögerbar ist, oder
- aus der in die Verschaltung der Empfangsspulen induzierten Spannung ein Kompensationsregelsignal erzeugbar ist, das über mindestens ein Kopplungsbauelement $C_P$ in den Knotenpunkt der Empfangsspulen einspeisbar und gegenüber dem Sendesignal in der Amplitude regelbar ist.

15. Vorrichtung nach Anspruch 14, **dadurch gekennzeichnet, dass** aus dem Empfangssignal durch Bildung eines Skalar-Produkts mit einem Referenzsignal ein niederfrequentes Signal erzeugbar ist und dieses zur Regelung der Bildung eines Anteils eines Kompensationssignals oder zur Regelung einer Verzögerung oder einer Phasenverschiebung zumindest eines Anteils eines Kompensationssignales verwendbar ist.

**Claims**

1. A coil arrangement for an inductive sensor, comprising

   - a transmitter coil,
   - at least one first receiver coil, and
   - at least one second receiver coil,
   - wherein the windings of the first receiver coil are inside all windings of the transmitter coil,
   - wherein the windings of the second receiver coil are outside all windings of the transmitter coil, and
   - wherein each winding of the first receiver coil is associated a winding of the second receiver coil and said windings are arranged in relation to the transmitter coil such that, when a current flows through the transmitter coil, said windings are permeated with a magnetic flux of the same size, but in opposite directions,
   **characterized by**
   - a compensation network used to symmetrize the arrangement such that the voltage induced at the receiver side is negligible for the intended purpose, by providing a regulation through a control loop
   - wherein at least a part of the compensation network is formed as a star-shaped interconnection of at least three capacitors $C_{ks}$, $C_{k1}$ and $C_{k3}$, said partial network having a common star point $K_C$.

2. The coil arrangement according to claim 1, **characterized in that** the common star point $K_C$ is connected to the common reference point via a network forming a complex impedance.

3. The coil arrangement according to claim 2 , **characterized in that** the common star point $K_C$ is connected to the common reference point via a network forming a complex impedance with a single capacitor $C_{kh}$.

4. The coil arrangement according to claim 2 or 3, **characterized in that** the common star point $K_c$ is connected to the common reference point on the primary side via a network forming a complex impedance.

5. The coil arrangement according to any one of claims 1 to 4, **characterized in that** the two receiver coils are interconnected, wherein the voltages induced in the two receiver coils when a current flows through the transmitter coil substantially cancel each other out to produce a total output voltage, wherein the two receiver coils are particularly connected in series or connected to a differentiator.

6. The coil arrangement according to any one of claims 1 to 5, **characterized in that** all coils are configured as flat coils or helical coils, or that all coils are arranged cylindrically or concentrically to each other, wherein in both alternatives the windings of the coils can comprise any geometric form and are particularly round, oval, polygonal or the like.

7. The coil arrangement according to claim 6, **characterized in that** the coils are arranged on a common plane when being configured as flat coils or as helical coils.

8. The coil arrangement according to claim 5 to 7, **characterized in that** the coils are manufactured in a lithography step or monolithically on a planar substrate or a semiconductor wafer or a glass pane or a ceramic plate by printing or by photolithography or electron-beam lithography or ion-beam lithography or particle-beam lithography.

9. The coil arrangement according to any one of the preceding claims, **characterized in that** the supply lines of the windings are at least partially provided in radial direction and/or that the supply lines of the windings are at least partially provided in a different metallization plane than the windings and are insulated from the windings.

10. The coil arrangement according to any one of the preceding claims, **characterized in that** all coils are rotationally symmetric and/or that all coils have the same axis of symmetry.

**11.** The coil arrangement according to any one of the preceding claims, **characterized in that** a receiver coil inside the transmitter coil is interconnected with a receiver coil outside the transmitter coil, and that the induced voltages extinguish in the absence of a measurement object and only voltage levels caused by parasitic elements remain and an additional non-zero voltage is induced in the presence of an object.

**12.** The coil arrangement according to any one of the preceding claims, **characterized in that** at least one node of the receiver coils or a winding of at least one receiver coil is provided with at least one voltage limiting device.

**13.** The coil arrangement according to any one or several of the preceding claims, **characterized in that** the transmitter coil comprises only one transmitter winding, and that the number of windings of the first receiver coil corresponds to the number of windings of the second receiver coil.

**14.** A device for controlling a coil arrangement according to any one of the preceding claims, **characterized in that**

- a compensation control signal is adapted to be generated from the voltage induced in the interconnection of the receiver coils, said compensation control signal being adapted to be fed into the node of the receiver coils via at least one coupling component $C_P$,
- a compensation control signal is adapted to be generated from the voltage induced in the interconnection of the receiver coils, said compensation control signal being adapted to be fed into the node of the receiver coils via at least one coupling component Cp and to be phase-shifted or delayed compared to the transmitter signal, or
- a compensation control signal is adapted to be generated from the voltage induced in the interconnection of the receiver coils, said compensation control signal being adapted to be fed into the node of the receiver coils via at least one coupling component Cp and to be controller in amplitude compared to the transmitter signal.

**15.** The device according to claim 14, **characterized in that** a low-frequency signal is adapted to be generated from the receiver signal by forming a scalar product with a reference signal, and that said low-frequency signal is adapted to be used for controlling the formation of a portion of a compensation signal or for controlling a delay or a phase-sift of at least a portion of a compensation signal.

**Revendications**

**1.** Assemblage de bobines pour un capteur inductif, doté

- d'une bobine émettrice,
- d'au moins une première bobine réceptrice et
- d'au moins une deuxième bobine réceptrice,
- dans lequel les spires de la première bobine réceptrice se trouvent à l'intérieur de toutes les spires de la bobine émettrice,
- dans lequel les spires de la deuxième bobine réceptrice se trouvent à l'extérieur de toutes les spires de la bobine émettrice et
- dans lequel à chaque spire de la première bobine réceptrice est associée une spire de la deuxième bobine réceptrice et ces spires sont disposées en relation à la bobine émettrice de telle sorte que lesdites spires sont traversées par un flux de courant magnétique de grandeur égale mais dans des directions opposées lorsqu'un courant passe à travers la bobine émettrice,
**caractérisé par**
- un réseau de compensation servant à symétriser l'assemblage de telle sorte que la tension induite côté récepteur est négligeable pour les fins prévues, à savoir par prévision d'une régulation par une boucle de contrôle,
- dans lequel au moins une partie du réseau de compensation est réalisé comme montage en étoile d'au moins trois condensateurs $C_{ks}$, $C_{k1}$ et $C_{k3}$, dans lequel ce sous-réseau comporte un point neutre commun $K_c$.

**2.** Assemblage de bobines selon la revendication 1, **caractérisé en ce que** le point neutre commun $K_c$ est relié au point de référence commun par le biais d'un réseau formant une impédance complexe.

**3.** Assemblage de bobines selon la revendication 2, **caractérisé en ce que** le point neutre commun $K_c$ est relié au point de référence commun par le biais d'un réseau formant une impédance complexe avec un condensateur individuel $C_{kh}$.

**4.** Assemblage de bobines selon la revendication 2 ou 3, **caractérisé en ce que** le point neutre commun $K_C$ est relié au point de référence commun sur le côté primaire par le biais d'un réseau formant une impédance complexe.

**5.** Assemblage de bobines selon l'une des revendications 1 à 4, **caractérisé en ce que** les deux bobines réceptrices sont interconnectées, dans lequel les tensions induites dans les deux bobines réceptrices lorsqu'un courant passe à travers la bobine émettrice s'annulent sensiblement l'une et l'autre afin d'obtenir une tension de sortie totale, dans lequel les deux bobines réceptrices sont en particulier montées en série ou sont reliées avec un moyen de différenciation.

**6.** Assemblage de bobines selon l'une des revendications 1 à 5, **caractérisé en ce que** la totalité des bobines sont réalisées comme bobines plates ou en spirale ou **en ce que** la totalité des bobines sont cylindriques et disposées de manière concentrique l'une par rapport à l'autre, dans lequel, dans les deux cas, les spires des bobines peuvent comporter une forme géométrique quelconque et sont en particulier rondes, ovales, polygonales ou similaires.

**7.** Assemblage de bobines selon la revendication 6, **caractérisé en ce que** les bobines, en cas de réalisation comme bobines plates ou en spirale, sont disposées sur un même plan.

**8.** Assemblage de bobines selon l'une des revendications 5 à 7, **caractérisé en ce que** les bobines sont produites dans une étape de lithographie ou de manière monolithique sur un substrat plan ou une galette semi-conductrice ou une vitre ou une plaque de céramique par impression ou photolithographie ou lithographie par faisceau d'électrons ou par faisceau d'ions ou par faisceau de particules.

**9.** Assemblage de bobines selon l'une des revendications précédentes, **caractérisé en ce que** les alimentations des spires sont configurées au moins partiellement dans la direction radiale et/ou **en ce que** les alimentations des spires sont configurées au moins partiellement dans une autre couche de métallisation que les spires et sont isolées des spires.

**10.** Assemblage de bobines selon l'une des revendications précédentes, **caractérisé en ce que** la totalité des bobines sont symétriques en rotation et/ou **en ce que** la totalité des bobines ont le même axe de symétrie.

**11.** Assemblage de bobines selon l'une des revendications précédentes, **caractérisé en ce qu'**une bobine réceptrice se trouvant à l'intérieur de la bobine émettrice est interconnectée avec une bobine réceptrice se trouvant à l'extérieur de la bobine émettrice et **en ce que** les tensions induites en cas d'absence d'un objet de mesure s'éliminent et seuls les niveaux de tension engendrés par des éléments parasites demeurent et une tension non nulle est en outre induite en cas de présence d'un objet.

**12.** Assemblage de bobines selon l'une des revendications précédentes, **caractérisé en ce qu'**au moins un point nodal des bobines réceptrices ou une spire d'au moins une bobine réceptrice est prévue dotée d'au moins un dispositif limiteur de tension.

**13.** Assemblage de bobines selon l'une ou plusieurs des revendications précédentes, **caractérisé en ce que** la bobine émettrice comporte une seule spire émettrice et **en ce que** le nombre de spires de la première bobine réceptrice est égal au nombre de spires de la deuxième bobine réceptrice.

**14.** Dispositif destiné à commander un assemblage de bobines selon l'une des revendications précédentes, **caractérisé en ce que**

- un signal de régulation de compensation peut être obtenu à partir de la tension induite dans l'interconnexion des bobines réceptrices, lequel peut être injecté dans le point nodal par le biais d'au moins un composant de couplage Cp, ou
- un signal de régulation de compensation peut être obtenu à partir de la tension induite dans l'interconnexion des bobines réceptrices, lequel peut être injecté dans le point nodal par le biais d'au moins un composant de couplage Cp et est déphasé ou retardable par rapport au signal d'émission, ou
- un signal de régulation de compensation peut être obtenu à partir de la tension induite dans l'interconnexion des bobines réceptrices, lequel peut être injecté dans le point nodal par le biais d'au moins un composant de couplage Cp et est régulable en amplitude par rapport au signal d'émission.

**15.** Dispositif selon la revendication 14, **caractérisé en ce qu'**à partir du signal de réception, par formation d'un produit scalaire avec un signal de référence un signal basse fréquence peut être obtenu et celui-ci peut être utilisé pour la régulation de la formation d'une composante d'un signal de compensation ou pour la régulation d'un retardement ou d'un déphasage d'au moins une composante d'un signal de compensation.

Fig. 1

EP 3 594 724 B1

Fig. 2

Fig. 3

Fig. 4

EP 3 594 724 B1

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009021804 A
- DE 102009029928 A
- DE 10362165 A
- DE 202006004158 U
- DE 10122741 A
- EP 2511736 A
- US 3882374 A
- EP 2631674 A
- DE 102012015442 A

**In der Beschreibung aufgeführte Nicht-Patentliteratur**

- **LASKOSKI ; PICHORIM ; ABATTI.** Distance Measurement With Inductive Coils. *IEEE Sensors Journal,* 2012, vol. 12 (6